Europäisches Patentamt

European Patent Office

Office européen des brevets

(19)

(11) EP 1 453 320 A2

(12) **EUROPEAN PATENT APPLICATION**

(43) Date of publication:
01.09.2004 Bulletin 2004/36

(51) Int Cl.⁷: $H04N\ 7/26$, $H04N\ 7/30$

(21) Application number: 03104873.9

(22) Date of filing: 22.12.2003

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 20.12.2002 FI 20022260

(71) Applicant: Oplayo Oy
00180 Helsinki (FI)

(72) Inventors:
• Kesäniemi, Martti
  00700 Helsinki (FI)
• Pohjola, Teemu
  Espoo 02660 (FI)

(74) Representative: Savela, Antti-Jussi et al
Patent Agency Compatent Ltd.
Hämeentie 29, 4th. Fl.
00500 Helsinki (FI)

(54) **Image encoding method and arrangement**

(57) This invention relates to encoding and decoding techniques concerning images. The invention utilizes the principle that an image or a part thereof may contain a dominating direction that is other than a horizontal or vertical direction. Using DCT components, which are designed to this dominating spatial frequency, fewer non-zero components are needed for the transformation than if the normal DCT components are used, thereby enabling more efficient compression of the image.

FIG. 5

EP 1 453 320 A2

**Description**

**Field of the Invention**

This invention relates to encoding techniques concerning images. The images may be still images or single images of a video. Particularly, the invention relates to DCT (Discrete Cosine Transform) encoding techniques. Naturally, the invention also relates to the decoding techniques.

**Background of the Invention**

Generally, encoding an image can be carried out in three different stages: a preliminary processing stage; a transforming stage; and a coding stage. In the first stage the image (consisting of pixels or raster) is changed into a suitable form, such as several smaller image blocks, for the transforming stage. Then, in the second stage, the image blocks are transformed into a frequency form. Finally, in the third stage, the information relating to the frequencies is compressed using RLC coding (Run-Length Coding) or Huffman coding, for example.

When encoding an image that is composed of pixels, it is customary first to divide the image into image blocks of 8*8 pixels and after that to consider different color components using, for example, RGB color space ( RGB is Red-Green-Blue) or YCrCb color space (Y is luminance and Cr and Cb chrominance/color components) transformation for the image blocks. Each color component represents a value, whereby each pixel can be described by three values. The methods described in the following apply separately to each of these values.

The most widely used image encoding technique is based on a two-dimensional Discrete Cosine Transform DCT of the pixel values. Equation 1 shows an example of the DCT transform for 8*8 image blocks:

$$Z(k,l) = \frac{1}{4} C_k C_l \sum_{i=0}^{i=7} \sum_{j=0}^{j=7} x(i,j) \cos\frac{\pi(2i+1)k}{16} \cos\frac{\pi(2j+1)l}{16} \qquad (1)$$

$Z(k,l)$ means 64 transformed coefficient values and represents exactly the same information than the original 8*8 image blocks. In other words the original image blocks can be recovered by using an Inverse Discrete Cosine Transform IDCT.

In equation (1) $k$ is the row index and $l$ the column index of the 8*8 coefficient matrix. Index values range from zero to seven. As can be seen, the DCT transform is lossless, i.e. the inverse transformation creates the identical pixel values with the original pixels. The $i$ is the row index and $j$ the column index of the original pixel block. $C_k$ and $C_l$ are constants used, and x($i,j$) is a pixel value at a given row and column.

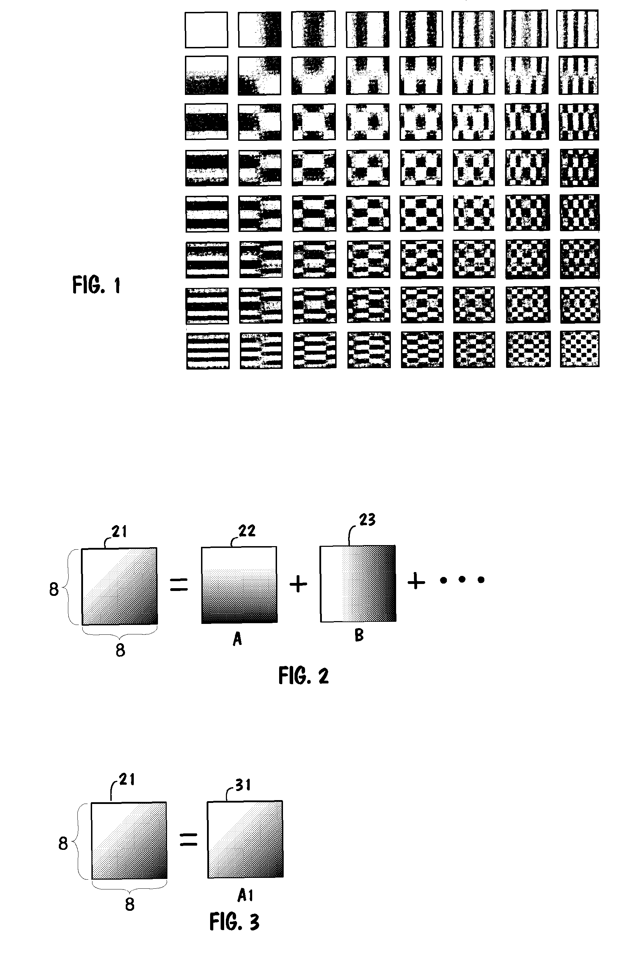

As illustrated in equation (1), the top-left value in the coefficient component represents the DC component of the image block and the bottom-right value the highest horizontal and vertical frequencies of the image block. FIG. **1** shows an example of the DCT frequencies of an image. Horizontal frequency increases to the right and vertical frequency increases downwards. Using the horizontal and vertical frequencies, it is possible to illustrate any pixel block, in this case an 8*8 pixel block. Usually, the highest frequency components of an image are zero or minor values that can be excluded. The DCT encoding is based on two principles: 1) usually among the DCT coefficients there are more insignificant values that can be excluded/omitted with only minor impact on the quality of the recovered image block than in the original image block, where each pixel value is of equal significance; 2) the coefficient values may be quantized in a frequency-dependent manner which is compression efficient. However, all blocks are preferably checked for finding out all significant coefficients. Usually, the more complex an image block is, the greater the numbers of coefficients need to be retained. However, due to the bias towards horizontal and vertical variations in the image blocks, the basic DCT is inefficient for coding e.g. diagonal patterns. The result is a large amount of significant coefficients and consequently a poor compression ratio, i.e. an unnecessarily large number of bits.

The object of the invention is to eliminate this drawback.

**Summary of the Invention**

An objective is to provide an efficient and fast encoding method and encoding arrangement for still images, as well as single images of video. In practice, this also results in cost and memory savings.

The established objective is achieved in the manner presented in the independent claims.

In one embodiment of the invention the encoding process for a still image or a single image of a video comprises the following steps: a) dividing an image or a part of the image that is composed of pixels into several image blocks (a block size of 8*8 pixels, for example); b) analyzing a dominant direction of the pattern in each image block in turn; c) in response to the analyzing result selecting at least one component from the most suitable component bank; d) transforming each image block in turn using selected component(s); e) quantizing the transformed image block (i. e. the transformation coefficients); and f) coding the quantization results.

In the solution according to the invention, there are more than one different component banks, each of which has several components. One of the component banks is the prior art component bank, i.e. it comprises combinations of horizontal and vertical components. In addition, there is at least one directional component bank comprising components which are directed to a predefined direction other than horizontal or vertical direction (e.g.45 degrees). The application determines the number of component banks needed.

Thus each of the component banks comprises several components. If the image block is of 8*8 pixels, the component bank advantageously comprises 64 different components. However, depending on the application used, the number of components may also be some other than that. Thanks to directed components fewer components are needed in the encoding process according to the invention. This is due to the fact that for transformation of an image block it is possible to choose the most suitable component, whose frequency direction is as close as possible to the direction of a dominant direction of the block pattern in the image block in turn to be transformed.

The encoded image is possible to decode back to the original i m-age performing inversely the above-described steps: a) decoding the transformed image blocks; b) requantizing the transformed image blocks; c) transforming inversely (I) said image blocks; d) changing the image blocks to the original image.

The arrangement for encoding (decoding) comprises several special-purpose modules for performing the above-described steps of the encoding (decoding) process.

The invention also relates to an encoding (decoding) computer program product stored on a computer readable storage media. The product is adapted to perform the above-described steps.

**Brief Description of the Drawings**

In the following the invention is described in more detail by means of Figs **1 - 9** in the attached drawings where,

FIG. **1**    illustrates an example of the DCT frequencies of an image;

FIG. **2**    illustrates an example of an image block and it's DCT coefficient components according to the normal DCT transform,

FIG. **3**    illustrates an example of the same image block as in FIG. 2 and the block's DCT coefficient component according to the inventive DCT transform;

FIG. **4**    illustrates an example of dominant directions of patterns of 3 component banks;

FIG. **5**    illustrates an example of a flow chart describing one embodiment of the inventive method;

FIG. **6**    illustrates an example of a flow chart describing another embodiment of the inventive method;

FIG. **7**    illustrates an example of a flow chart describing yet another embodiment of the inventive method;

FIG. **8**    illustrates an example of an encoding arrangement according to the invention; and

FIG. **9**    illustrates an example of a decoding arrangement according to the invention.

**Description of the Invention**

This invention relates to encoding (decoding) techniques concerning images. The encoding (decoding) process comprises different steps that are described in more detail in the following.

In examples a DCT component bank forms a transformation basis comprising a set of DCT components. A DCT component's size is equal to an image block, 8*8 matrix, for example. The DCT component bank according to the invention is called the directional (or extra or component specific) DCT component bank. Its DCT components are directional DCT components. A normal DCT component bank refers to the prior art DCT component bank. A DCT component bank may refer either to the normal DCT component bank or the directional DCT component bank. Similarly a DCT component may refer to the directional DCT component or a DCT component of the normal DCT component bank.

Selection of a transformation basis (components) depends on the patterns in an image block. The better the frequency direction in the components used corresponds to the direction of a dominant direction of block patterns in the image block the more efficient and the faster is the encoding process which, on the other hand, determines the whole encoding quality.

It is to be noted that the DCT component and the DCT component bank may also be named the DCT block and the DCT block bank, respectively in the literature. We have used the former terms to prevent confusion with the term image block.

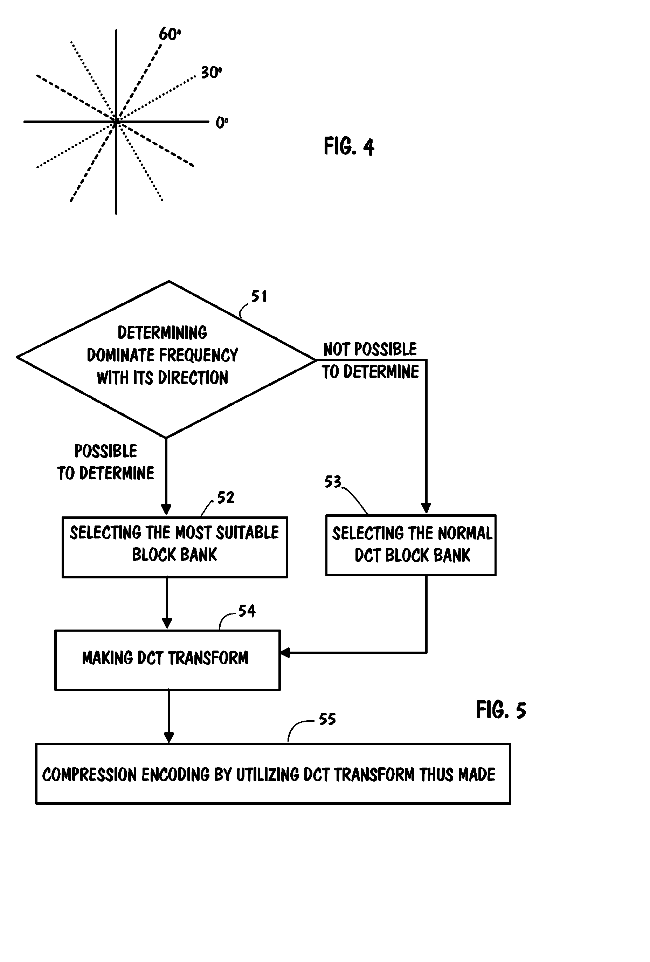

Figs **2** and **3** illustrate the benefit of the invention. In FIG. **2** 8*8 image block **21** is transformed by using the normal DCT transformation. The block shows a diagonal pattern in which the bright area is at the top-left corner and the dark are at the bottom-right corner. This simple pattern of 8*8 pixels is transformed by using a number of DCT components, from which two of them are illustrated **22** and **23** in FIG. 2. The components correspond to frequencies, which are half a cycle per block - one **22** in a vertical direction and the other **23** in a horizontal direction. The vertical frequency is multiplied by coefficient **A** and the horizontal frequency by coefficient **B**. The coefficients represent the amplitudes of the frequencies. After multiplication the thus weighted components are added together. The result represents the original image block.

FIG. **3** shows how the same image block **21** of FIG. **2** is transformed by using a directed DCT component. Since the image block shows the pattern that is diagonal, the dominant frequency of this image is diagonal, the same direction as the pattern. The direction is in this case the slope of **45** degrees downward form left to right in the image block. It is preferable to have DCT components in this direction when the number of components needed for the transformation is fewer than by using the normal DCT components. In this simple example, the image block **21** illustrates the frequency of half a cycle per block 45 degrees downward, so only one directed DCT component **31** is needed for transformation. Coefficient **A1** represents the amplitude of the block's frequency. If the pattern is more complex, it may also be necessary to use frequency components whose direction of frequency is orthogonal with block **31**.

Comparing FIG. **3** to FIG. **2** it is noted that the saving in the directed DCT components needed for coding is several components. In this case, the block can be coded with only a fraction of the components needed for the normal DCT transformation. Naturally, the saving of the DCT components depends on the pattern of the original image block. It is essential to determine the dominant direction (In this direction patterns have the greatest sum value of frequency components.) of an image block, since using combinations of the normal DCT frequency directions may use more DCT components. The dominant direction is probably parallel or near with the lowest frequency component of an image. A human eye is more sensitive to low spatial frequencies than high frequencies, so low frequencies are more important than high frequencies. It should be noted that if the dominant direction of an image block is in a vertical or horizontal direction, it is preferable to use the normal DCT transform because this can be optimized for faster processing both in the encoding and the decoding stage.

Since patterns in an image block may have the dominant direction in any direction, different DCT component banks for different obliques have to be created for the efficient use of the invention. A simple solution is to create one extra component bank to the side of the normal DCT component bank. The extra component bank may correspond, for example, to orthogonal frequencies whose directions differ 45 degrees from the directions of the normal DCT components, as illustrated in FIG. **3**. A convenient solution may be that there are two extra component banks in addition to the normal DCT component bank. FIG. **4** illustrates frequency directions of 3 component banks: the zero angle coordinate represents the normal DCT component bank, the coordinate in 30 degrees angle represents one extra component bank, and the coordinate in 60 degrees the other extra component bank. Naturally the number of component banks (and the number of coordinates for different frequency directions) may be more than two.

FIG. **5** illustrates an example of one solution of the inventive method. The encoding of image blocks of one whole picture may be divided into two main steps: making a DCT transform and compressing the made DCT transform. In FIG. **5** steps **51** to **54** illustrate the main DCT transform step according to the inventive idea, and step **55** illustrates the compression step.

First the dominant direction must be determined in the image block **51**. This can be done by tracking patterns - such as lines - utilizing, for example, edge-detection filters. In practice, this can be done using FFT (Fast Fourier Transformation) transformation and/or a directional filtering. If it is possible to determine the dominant direction from the pattern of the image block, the next step is to select the most suitable DCT component bank for the i m-age block **52**, i.e. the determined direction must be as close as possible to the other axis of the suitable block bank's coordinate. If it is not possible to determine the dominant direction, the next step is to use the normal DCT component bank **53** (the component bank's horizontal axis is in zero angle). After selecting the component bank, the DCT transform is made by using the selected component bank **54.** Simply, the DCT transform is a mechanism to find the coefficient amplitudes from the original image block for the components of the DCT bank used.

When the DCT transform has been made the data of the image block is not yet compressed, so the next main step **55** is to do the compression by utilizing the DCT transform made. This step may contain many different sub steps. Some of them are mentioned in this text, but there may exist other steps or equivalent steps as well. A normal method is to use a transmission order in which the most significant coefficient values, i.e. the values at the top-left corner of the coefficient matrix or table, are transmitted first, and the insignificant values are transmitted last, i.e. the values at the bottom-right corner of the coefficient table. The order may be created by scanning the DCT coefficient table through a zigzag path from the top-left corner to the bottom-right corner. The created transmission order is advantageous for the subsequent encoding steps. Next, the ordered coefficients are weighted and quantized. The quantization reduces word lengths, which are needed for the coefficients. This is done by dividing each coefficient by some factor followed by rounding to the nearest integer value; this procedure permits the use of fewer bits for the word length. However, the quantization gives rise to a quantizing error. For alleviating the quantizing error, all the DCT coefficients may be quantized differently based on the frequency of each component.

The word lengths of the coefficients are assigned more bits in low frequencies than in high frequencies, since the low frequencies tend to be more significant than the high frequencies, i.e., the amplitudes of the low frequency components are larger than the one of high frequency components, and these also occur more frequently in image blocks than the higher frequencies. This is called variable-length coding (VLC). It saves bits in the insignificant range of frequencies and focuses the coding accuracy on the significant range of frequencies.

Since the transmission of zero coefficients is inefficient, they can be coded into the next non-zero coefficient, which can be variable-length coded. This way of coding zero coefficients is called run-length coding (RLC). Often the VLC and RLC are combined together for forming a single code table. A usual method is to use Huffman coding.

As mentioned, these described coding actions are not the only way to create the compression-coding step **55**, but other solutions are possible as well. Naturally, when decoding the encoded material, the inverse actions must be made. For above-mentioned encoding actions, a decoder must have a look-up table for inverting the VLC/RLC coding. The weighted and requantized coefficients are reversed back by multiplying them by inverse factors. The decoder and the decoding method must also know the used zigzag path for the right order.

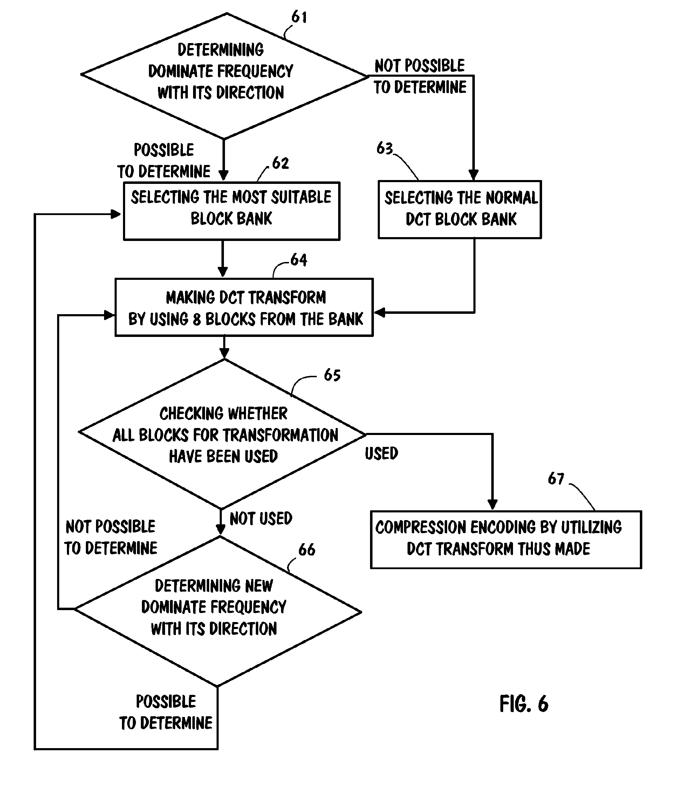

FIG. **6** illustrates an example of a flow chart describing another embodiment of the inventive method. Instead of using one component bank, this embodiment utilizes at least two component banks.

First the dominant direction must be determined in the image block **61**. If it is possible to determine the dominant direction from the pattern of the image block, the next step is to select the most suitable DCT component bank for the image block **62**, i.e. the determined direction must be as close as possible to the other axis of the suitable component bank's coordinate. If it is not possible to determine the dominant direction, the next step is to use the normal DCT component bank **63** (the component bank's horizontal axis is in zero angle). After selecting the block bank, the DCT transform is made by using 8 components of the selected component bank **64**. The number of components used, i.e. coefficients, may be another number as well. The aim is to use the most significant coefficients in the selected component bank, and after this to determine **66** a new possible dominant direction. If the new dominant direction is found, the contribution from the previously found components are first reduced from the original pattern, and then a new suitable component bank is selected **62**, and a new DCT transform is made **64** by using another 8- component set in the new component bank. If the new dominant direction is not found, a DCT transform is made **64** for the next 8 components in the same component bank. After each round, it is checked whether the all the coefficients (components) have been used **65**. A counter may be used for this purpose. If the all components have not been used, step **66** is performed. If the all components have been used and the number of components is limited to be less than the full set of 64 components, the main DCT transform step, containing steps **61** to **66**, is finished and the compression encoding is made **67** by utilizing the created DCT transform.

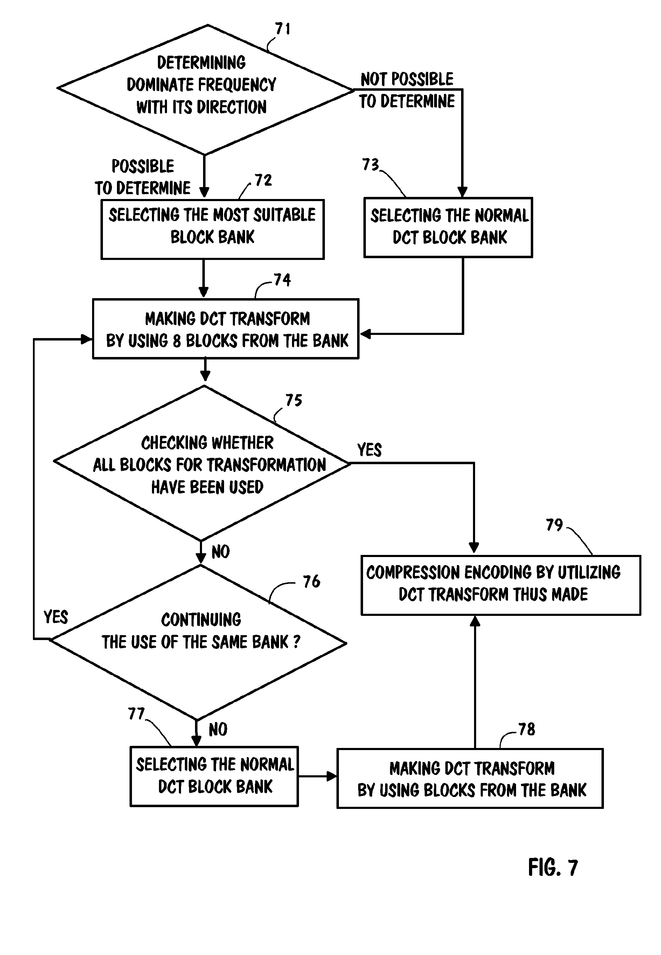

FIG. **7** illustrates an example of a flow chart describing yet another embodiment of the inventive method. In this case, one extra component bank is used with the normal DCT transform. First the dominant direction must be determined in the image block **71**. If it is possible to determine the dominant direction from the pattern of the image block, the next step is to select the most suitable DCT component bank for the image block **72**, i.e. the determined direction must be as close as possible to the other axis of the suitable component bank's coordinate. If it is not possible to determine the dominant direction, the next step is to use the normal DCT component bank **73** (the component bank's horizontal axis is in zero angle). After selecting the component bank, the DCT transform is made by using 8 components of the selected component bank **74**. The number of used components, i.e. coefficients, may be another number as well. The aim is to check whether there is another dominant direction than in the normal DCT component. If the original image block still contains a dominant direction in the same selected component bank after the transformation of the 8 components the selected component is continued **76** to be used for the next 8 components. However, if the original image block does not contain a dominant direction in the same selected component bank after the transformation of the 8 components, the contribution from the 8 components are reduced from the original pattern for checking the next significant frequencies. After this the normal DCT component is selected **77** for the rest of the components, when the DCT transform is made **78** by a normal DCT component bank. Since the number of coefficients is limited, it is checked whether the all the coefficients (components) have been used **75** in each round when the other component bank than the normal DCT component bank is used. If the all the components have been used and the number of components is less than the full set of 64 components, the main DCT transform step, containing steps **71** to **78**, is finished and the compression encoding is made **79** by utilizing the created DCT transform.

FIG. **5** shows the situation where only one component bank is used for the transformation. FIG. 6 shows the situation where it is possible to use several component banks for the transformation in series of 8 components, but the size of the series may be another as well. When comparing Figs **5** and **6**, it can be noted that an embodiment of a method according to the inventive idea may be realized by any variation between the solutions of Figs **5** and **6**. FIG. **7** shows one possible variation where one or two component banks are used.

In the figures, the directionality of the image block is always analyzed first. However, this information can also be gained indirectly by transforming and compressing the block using one DCT component bank, or one combination of such banks, at a time and then selecting the bank or combination thereof that leads to the most efficient compression of the image block.

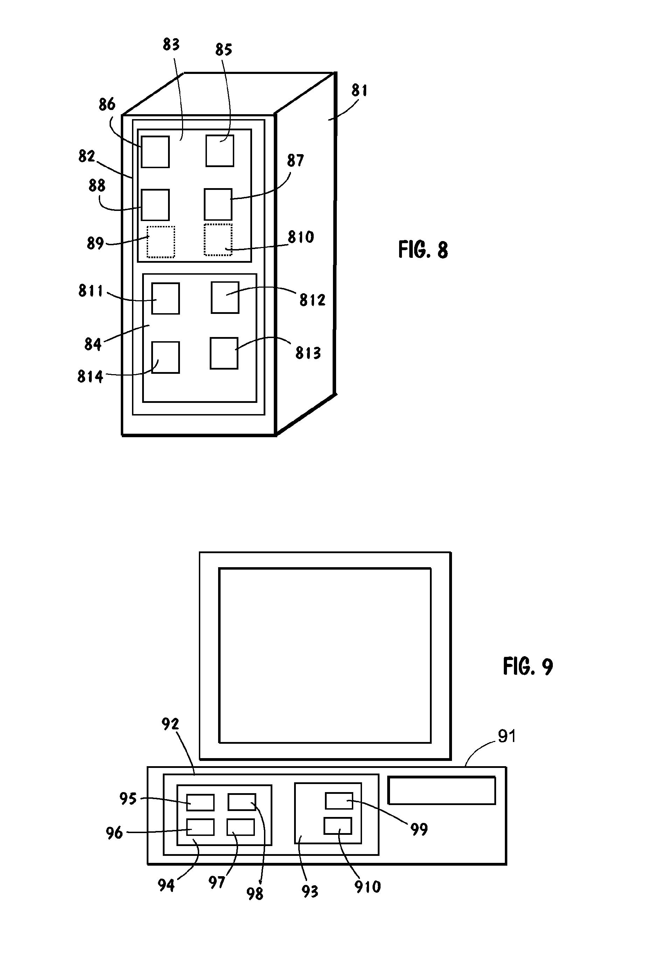

FIG. **8** illustrates an example of an encoding arrangement according to the invention. An inventive encoder **82** is often installed in a server **81**, which sends encoded video streams to receiving elements. As mentioned, the encoder may be divided into two main parts: the DCT transform part 83 and the compression encoding part **84**. The DCT transform part comprises DCT component banks **85** (the normal DCT bank and inventive banks), a determining module **86** for determining dominant direction in an original pixel block, a selecting module **87** for selecting the most preferable component bank, and a DCT-transform module **88** for making the DCT transform.

The determining module **86** determines dominant direction in an original pixel block. Next, the selecting module **87** selects the most preferable component bank from among the component banks **85**, which the DCT-transform module **88** utilizes for making the DCT transform.

If the encoder is adapted to use another embodiment of the inventive method (some examples described above), the DCT transform part **83** may contain a checking module **89** for checking whether the all the DCT coefficients have been used in the DCT transform and/or a comparison module **810** for comparing which one of the DCT components used is the most suitable.

The compression encoding part **84**, which utilizes the transformation result of the DCT transform part **83,** may comprise the following modules: an ordering module **811** for creating a preferable order for transmission and subsequent encoding steps, a weighting module **812** for weighting the DCT coefficient to be more robust against the requantization error, a requantization module **813** for requantizating the weighted DCT coefficient, and a VLC/RLC table **814** for making variable-length and run-length coding. As mentioned the encoding part may be created in another way as well.

FIG. **9** illustrates an example of a decoding arrangement according to the invention. A decoder **92** according to invention is usually in a receiving terminal **91** that receives video show streams. As with the encoder, the decoder **92** may be divided into two main parts: the inverse DCT transform part **93** and the inverse compression decoding part **94**. The inverse compression decoding part **94** may comprise a look-up table **95** for inverting the VLC/RLC coding, an inverse requantization module **96** for reversing the requantizating, a reverse weighting module **97** for reversing the weighting, and an ordering module **98** for managing the bit order when decoding to DCT coefficients.

The inverse DCT transform part **93** comprises DCT component banks **99** and a component bank control module **910** for selecting the right component banks when making the inverse DCT transform. The decoder may be created in another way as well.

As can be noted, the inventive DCT transform utilizes the real direction of frequencies of an image block, which means that more DCT coefficients become zero or near zero. This result of the DCT transformation according the invention increases a coding gain factor (the technical term for reduction in the number of bits needed) in the compression-encoding step. Due to this the invention makes it possible to increase the coding gain to achieve a better compression ratio or to achieve better image quality when decoding back to the visible form.

Although, the invention is described in this text with few examples, it is clear that other solutions are possible as well. For example, the component size may be different than 8*8 values, which are considered to be a preferable size. Depending on the application used it is possible to utilize at least one directional DCT component bank or at least one directional DCT component bank together with the normal DCT component bank. In one embodiment, the determination of the dominant direction may be done before selecting the DCT component bank (fast process) and in another embodiment after making a number of transforms with DCT components from several DCT component banks, whereby the decision of selection is based on the best compression result (slow process). In other words, the number of transforms is made for finding the DCT component matching the transform best.

Thus the invention is not restricted to the examples of this text, but the invention may be utilized in other embodiments, in the scope of the inventive arrangement.


**Claims**

1. A method for encoding an image, wherein the image is divided into several blocks and a transform is utilized, **characterized in that** the method comprises the steps of:

   - finding from at least one component specific component bank for each of the blocks in turn, at least one component whose frequency direction is as close as possible to the direction of a dominant direction of block pattern,
   - making the transform for the block using the said component(s), and
   - compression encoding the created transform.

**2.** A method according to claim 1, **characterized in that** the finding step comprises the steps of:

- analysing a dominant direction of the pattern in an image block at a time, and
- selecting, in response to the analysing result, the most suitable component specific component bank.

**3.** A method according to claim 1, **characterized in that** the finding step comprises the steps of:

- making the transform for each of the blocks in turn using component(s) from at least one said component bank, and
- selecting, in response to the analysing result, the most suitable component specific component bank.

**4.** A method according to claim 2, **characterized in that** edge-detection filters are used for analysing.

**5.** A method according to claim 1, **characterized in that** the component specific component bank comprises components whose direction is other than horizontal or vertical direction.

**6.** A method according to claim 2 or 4, **characterized in that** if the analysis fails to find the dominant direction, the selecting step selects a component bank having combinations of horizontal and vertical components.

**7.** A method according to claim 1, **characterized in that** the finding step comprises the steps of:

- making the transform for each of the blocks in turn using components from at least one said component bank and/or using components from a component bank having combinations of horizontal and vertical components, and
- selecting in turn the most suitable component specific component bank or the component bank having combinations of horizontal and vertical components, in response to the analysing result.

**8.** A method according to any one of the preceding claims, **characterized in that** the method comprises the step of checking whether all components for the transformation have been used before determining a new frequency direction, which is used for the transformation.

**9.** A method according to any one of the preceding claims, **characterized in that** the method comprises the step of checking whether all components for the transformation have been used and after this the step of making a decision to continue the use of the selected component bank or to select the normal component bank before performing the transform by using subsequent coefficients which represent the amplitudes of the frequencies.

**10.** A method according to any one of the preceding claims, **characterized in that** the compression encoding step comprises the substeps of:

- creating an order for bits to be transmitted;
- weighting the transformed coefficients;
- requantizing the weighted coefficient; and
- performing a variable-length coding / run-length coding.

**11.** A method according to any one of the preceding claims, **characterized in that** the transform is a discrete cosine transform, whereby the said component bank is a discrete cosine transform component bank.

**12.** An arrangement for encoding an image, wherein the image is divided into several blocks and a transform is utilized, **characterized in that** the arrangement is adapted to:

- find from at least one component specific component bank for each of the blocks in turn, at least one component whose frequency direction is as close as possible to the direction of a dominant direction of the block pattern,
- make the transform for the block using the said component(s), and
- compression encode the created transform.

**13.** An arrangement according to claim 12, **characterized in that** the arrangement is further adapted to:

- analyse a dominant direction of the pattern in an image block at a time, and

- select, in response to the analysing result, the most suitable component specific component bank.

**14.** An arrangement according to claim 12, **characterized in that** the arrangement is further adapted to:

- make the transform for each of the blocks in turn using component(s) from at least one said component bank, and
- select, in response to the analysing result, the most suitable component specific component bank.

**15.** An arrangement according to claim 13, **characterized in that** the arrangement is further adapted to use edge-detection filters for analysing.

**16.** An arrangement according to claim 12, **characterized in that** a component specific component bank comprises components whose direction is other than horizontal or vertical direction.

**17.** An arrangement according to claim 12 or 13, **characterized in that** the arrangement is further adapted to select a component bank having combinations of horizontal and vertical components if the analysis fails to find the dominant direction.

**18.** An arrangement according to claim 12, **characterized in that** the arrangement is further adapted to check whether all components for the transformation have been used before determining a new frequency direction, which is used for the transformation.

**19.** An arrangement according to any one of the preceding claims, **characterized in that** the arrangement is further adapted to check whether all components for the transformation have been used and after this the step of making a decision to continue the use of the selected component bank or to select the component bank having combinations of horizontal and vertical components, before performing the transform by using subsequent coefficients which represent the amplitudes of the frequencies.

**20.** An arrangement according to any one of the preceding claims, **characterized in that** in the compression encoding step the arrangement is further adapted to:

- create an order for bits to be transmitted;
- weight the transformed coefficients which represent the amplitudes of the frequencies ;
- requantize the weighted coefficient; and
- perform a variable-length coding / run-length coding.

**21.** An arrangement according to any one of the preceding claims, **characterized in that** the transform is a discrete cosine transform, whereby the said component bank is a discrete cosine transform component bank.

**22.** An arrangement for decoding an image, wherein a transform is utilized, **characterized in that** the arrangement is adapted to:

- make an inverse compression encoding, and
- make an inverse transform for each decompressed image block by using the same component bank(s) that were used when encoding.

**23.** An arrangement according to claim 22, **characterized in that** the arrangement is further adapted to:

- use at least one component specific component bank and/or a component bank having combinations of horizontal and vertical components, and
- select the right bank(s) in turn.

**24.** An arrangement according to claim 22 or 23, **characterized in that** the arrangement is further adapted to:

- perform an inverse variable-length coding / run-length coding,
- requantize the quantized coefficients which represent the amplitudes of the frequencies;
- create an order for bits to be transmitted;
- weight inversely the weighted coefficients;

- manage an order for bits when decoding the transform coefficients.

**25.** A computer program product stored on a computer readable storage media, the product being adapted to perform the steps of claim 1 when run on a computer.

FIG. 1

FIG. 2

FIG. 3

FIG. 4

FIG. 5

**61** DETERMINING DOMINATE FREQUENCY WITH ITS DIRECTION

NOT POSSIBLE TO DETERMINE

POSSIBLE TO DETERMINE

**62** SELECTING THE MOST SUITABLE BLOCK BANK

**63** SELECTING THE NORMAL DCT BLOCK BANK

**64** MAKING DCT TRANSFORM BY USING 8 BLOCKS FROM THE BANK

**65** CHECKING WHETHER ALL BLOCKS FOR TRANSFORMATION HAVE BEEN USED

USED

NOT POSSIBLE TO DETERMINE

NOT USED

**67** COMPRESSION ENCODING BY UTILIZING DCT TRANSFORM THUS MADE

**66** DETERMINING NEW DOMINATE FREQUENCY WITH ITS DIRECTION

POSSIBLE TO DETERMINE

FIG. 6

FIG. 7

FIG. 8

FIG. 9